# NEUE EUROPÄISCHE PATENTSCHRIFT

(11) **EP 2 348 894 B2**
(45) Veröffentlichungstag und Bekanntmachung des Hinweises auf die Entscheidung über den Einspruch: **18.05.2016**
(45) Hinweis auf die Patenterteilung: 15.08.2012
(21) Anmeldenummer: 09783813.0
(22) Anmeldetag: 07.10.2009
(51) Int. Cl.: A23L 2/72, A23L 2/02, A23L 2/06, B04B 1/08, B04B 11/02

(54) **VERFAHREN ZUR REDUZIERUNG DES PÜLPEGEHALTES VON PÜLPEHALTIGEN FRUCHTSÄFTEN**
METHOD FOR REDUCING THE PULP CONTENT OF FRUIT JUICES CONTAINING PULP
PROCÉDÉ PERMETTANT DE RÉDUIRE LA TENEUR EN PULPE DE JUS DE FRUITS PULPEUX

(30) Priorität: 13.10.2008 DE 102008051499
(43) Veröffentlichungstag der Anmeldung: 03.08.2011
(73) Patentinhaber: GEA Mechanical Equipment GmbH, 59302 Oelde (DE)
(72) Erfinder: PECORONI, Stefan, 59302 Oelde (DE); GÜNNEWIG, Wolfgang, 59269 Beckum (DE); FLOCKE, Rüdiger, 33378 Rheda-Wiedenbrück (DE)
(74) Vertreter: Specht, Peter
(86) Internationale Anmeldenummer: PCT/EP2009/063028
(87) Internationale Veröffentlichungsnummer: WO 2010/043524

(56) Entgegenhaltungen:
- WO-A-95/01841
- DE-A1- 3 620 548

## Beschreibung

Die Erfindung betrifft ein Verfahren zur Reduzierung des Pülpegehaltes von pülpehaltigen Fruchtsäften, insbesondere von Zitrussäften, nach dem Oberbegriff des Anspruchs 1.

Es ist bekannt, bei der Herstellung von Zitrussäften aus Zitrusfrüchten zur Klärung eines pülpehaltigen Zitrussaftes Separatoren einzusetzen.

Bei der Herstellung von Zitrussäften werden die Zitrusfrüchte gewaschen, sortiert und den Entsaftungsmaschinen, den sogenannten Extraktoren zugeführt. Der von den Extraktoren ablaufende Saft enthält einen hohen Pülpeanteil, der in weiteren Prozessstufen entfernt wird. Finisher entfernen zunächst die gröberen Fruchtzellen.

Zur Abscheidung von Sandpartikeln aus Fruchtsaft wird ggf. ein Hydrozyklon der Separator vorgeschaltet. Separatoren trennen im nächsten Schritt feine Pülpe mit Separatoren. Je nach Produktionsschritt wird viel oder weniger Pülpe entfernt.

Um die Anzahl an Feststoffentleerungen, die jeweils mit einem gewissen Verlust an Saft einhergehen, zu reduzieren, ist es bekannt, die Pülpephase aus dem Feststoffraum des Separators über einen Scheideteller kontinuierlich zu einer Schälscheibe zu leiten und von dort aus der Maschine zu fördern. Durch diese Betriebsweise des Separators lässt sich die Anzahl der Entleerungen mit dem weiterhin vorhandenen - diskontinuierlichen Feststoffentleerungssystem - deutlich reduzieren. Bei der Klärung von Saft setzen sich häufig über die Zeit Feststoffpartikel auf den Tellern ab. Dieser Feststoffbelag reduziert die Kläreffizienz. Er muss im Allgemeinen 2 bis 3 mal pro Stunde durch eine Trommelentleerung z.B. durch Öffnen des Kolbenschiebers entfernt werden.

Die fließfähige und über einen Scheideteller abgeleitete Pülpephase weist in erster Linie relativ weiche, kompressible Feststoffe auf Es handelt sich damit trotz der noch gegebenen Rest-Fließfähigkeit der Pülpephase bei der Abtrennung dieser relativ viskosen Phase vom Zitrussaft um eine Fest-/Flüssigtrennung.

Nach der Klärung im Separator kann eine Weiterverarbeitung des derart geklärten Zitrussaftes erfolgen, beispielsweise ein Konzentrieren in Verdampfern, in denen der Wasseranteil im Saft reduziert wird.

Stand der Technik ist es auch, den Separator bei der Klärung des Zitrussaftes mittels eines optischen Trübungsgeräts im Ablauf der Klarphasenleitung zu steuern, um beispielsweise zu ermitteln, wann noch eine ergänzende Feststoffentleerung mit Hilfe des Kolbenschiebers notwendig ist. Aufgrund der Konsistenz von Zitrusfruchtanteilen und wegen der schnell wechselnden Eigenschaften des Produktes, welches der Maschine zugeführt wird, ist eine Steuerung in dieser Art allerdings zur Sicherung eines vollautomatischen Betriebes nicht ausreichend.

Insbesondere ergibt sich beim Anfahren des Separators sowie jeweils nach einer Feststoffentleerung das Problem, dass zunächst für einen gewissen Zeitraum Klarsaft mit durch die Schälscheibe zum Austrag der Pülpephase strömt, während sich im Feststoffsammelraum zunächst wieder Pülpe sammeln muß, bis diese über den Scheideteller abgeführt wird.

Zur Lösung dieses Problems ist es bekannt, die Schälscheibe zum Austrag der Pülpephase durch Verschließen eines dieser Schälscheibe nachgeschalteten Ventils zu verschließen und das Ventils erst wieder zu öffnen, wenn sich genügend Pülpe im Feststoffsammelraum gesammelt hat.

An dieser Vorgehensweise ist nachteilig, dass sie jeweils einen manuellen Eingriff beim Hochfahren des Separators sowie nach den Feststoffentleerungen mit Hilfe des Kolbenschiebers erfordert. Mit Hilfe des optischen Trübungsgerätes kann keine automatische Steuerung durchgeführt werden, da die Messung an der Klarphase insofern nicht aussagefähig genug ist.

Die Erfindung hat vor dem vorstehend erläuterten Hintergrund die Aufgabe, das gattungsgemäße Verfahren weiter zu optimieren. Insbesondere sollen die notwendigen manuellen Eingriffe beim Anfahren des Separators sowie nach Feststoffentleerungen vermeidbar sein.

Die Erfindung löst diese Aufgabe durch den Gegenstand des Anspruchs 1.

Vorteilhafte Ausgestaltungen der Erfindung sind den Unteransprüchen zu entnehmen.

Danach wird in die Pülpeabführleitung aus der Separatortrommel ein Dichtedurchflussmesssystem eingebaut, welches abhängig von der Dichte ein ansteuerbares Element ansteuert.

Das Verfahren eignet sich insbesondere für Fruchtsäfte, die so beschaffen sind, dass es möglich ist, die feststoffartige aber dennoch noch genügend fließfähige Pülpephase durch einen Flüssigkeitsaustrag aus der Separatortrommel abzuleiten. Für Zitrusfrüchte ist die Erfindung insofern besonders geeignet. Daneben kann sie aber auch zur Reduzierung des Pülpeanteils anderer Früchte eingesetzt werden, die eine derartige Konsistenz aufweisen, dass ihre Pülpe durch einen Flüssigkeitsaustrag insbesondere mittels Schälscheibe aus der Separatortrommel geleitet werden kann.

Nach der Erfindung wird bei einem zu geringen Feststoffanteil - d.h. beim Unterschreiten eines Dichtegrenzwertes - die Pülpephase ganz oder zum Teil über eine Rückführleitung in den Zulauf des Separators zurückgeleitet. Hierdurch wird das Problem von Produktverlusten nach dem Hochfahren der Maschine sowie nach Feststoffentleerungen mit einem weiteren diskontinuierlich arbeitenden Feststoffentleerungssystem auf einfache Weise gelöst, dann nach dem Hochfahren sowie nach dem Entleeren wird zunächst nach einer Dichtemessung für einen gewissen Zeitraum die über den Scheideteller abströmende Phase - zunächst hauptsächlich Klarsaft - in den Zulauf zurückgeleitet, bis sich nach einem gewissen Zeitraum genügend Pülpe im Feststoffsammelraum gesammelt hat, so dass die Pülpe beginnt, über den Scheideteller zu strömen. Die Dichtemessung wird nach einem vorgegebenen Zeitraum wiederholt, um festzustellen, ob die Dichte der Pülpe inzwischen hoch genug ist, um die Rückleitung der Pülpe in den Zulauf des Separators zu stoppen. Sodann erfolgt ein Umschalten und die aus dem Separator geleitete Pülpe wird in einen Pülpetank geleitet.

Derart kann auf einfache Weise durch ein einfaches Regelverfahren das Anfahren des Separators sowie das Weiterbetreiben nach einer Feststoffentleerung automatisiert werden.

Vorzugsweise kommen bei einem Separator, z.B. vom Typ GSE 200 der Anmelderin, ausgerüstet mit einer kontinuierlichen "Entpülpungsvorrichtung" wie beschrieben, an Orangensaft folgende Parameterbereiche zur Anwendung:
Zulaufleistung Saft: 15.000 bis 25.000 l/h; vorzugsweise 18.000-22.000 l/h
Feststoffgehalt im zulaufenden Saft: 10-14 %Vol.; vorzugsweise: 10-12 %Vol.
Feststoffgehalt im ablaufenden Saft: 0,5-2,0 %Vol; vorzugsweise: 0,5-1 % Vol.
Soll Feststoffkonzentration im Pülpestrom: 80-95 %Vol.
Ist Feststoffkonzentration im Pülpestrom beim Anfahren: 10-28 %Vol (Saftkonzentration im Zulauf maximal verdoppelt!)
Umschaltpunkt der Regelung: 60 bis 80 % Vol; vorzugsweise 75 bis 80 %Vol.

Bei der Verarbeitung von Zitronensaft ergeben sich vorzugsweise folgende vorteilhafte Parameter:
Zulaufleistung Saft: 12.000 bis 25.0001/h; vorzugsweise 15.000-18.000 l/h
Feststoffgehalt im zulaufenden Saft: 8-12 %Vol.; vorzugsweise: 8-10 %Vol.
Feststoffgehalt im ablaufenden Saft: 0,5-2,0 %Vol; vorzugsweise: 0,5-1 % Vol.
Soll Feststoffkonzentration im Pülpestrom: 80-95 %Vol.
Ist Feststoffkonzentration im Pülpestrom beim Anfahren: 16-24 %Vol (Saftkonzentration im Zulauf maximal verdoppelt!)
Umschaltpunkt der Regelung: 60 bis 80 % Vol; vorzugsweise 75 bis 80 %Vol.

Nachfolgend wird die Erfindung unter Bezug auf die Zeichnung anhand von Ausführungsbeispielen näher beschrieben. Es zeigt:
Fig 1. eine vereinfachte schematische Darstellung einer Anlage zur Verringerung des Pülpegehaltes von Zitronensäften; und
Fig. 2 eine Schnittdarstellung eines für die Durchführung des Verfahrens aus Fig.1 geeigneten, bekannten Separators.

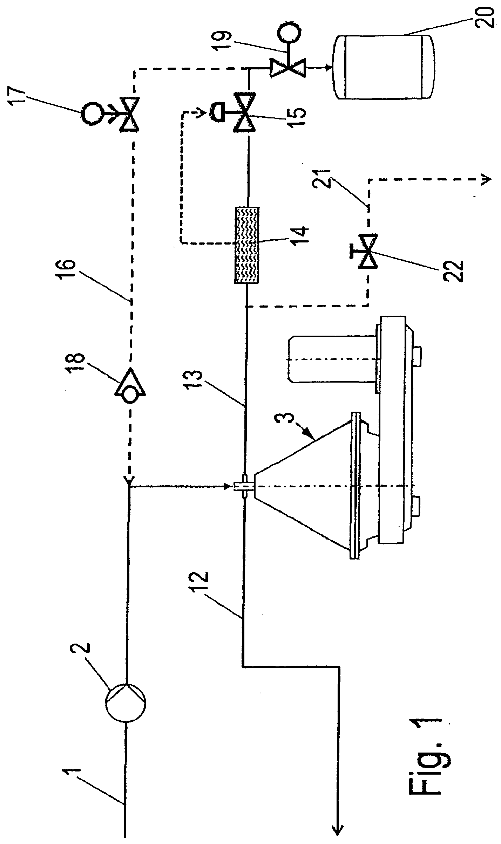

Nach Fig. 1 wird ein Zitrussaft mit einem zu verringernden Pülpegehalt durch eine Zuleitung 1, in die eine Pumpe 2 geschaltet sein kann, in die Trommel eines in Fig. 1 nur rein schematisch dargestellten Tellerseparators 3 geleitet. Der Tellerseparator 3 klärt den Furchtsaft, vorzugsweise den Zitrussaft, wobei die Pülpe enthaltende Pülpephase durch eine erste Austragseinrichtung und der geklärte Zitrussaft durch eine zweite Austragseinrichtung kontinuierlich ausgetragen werden.

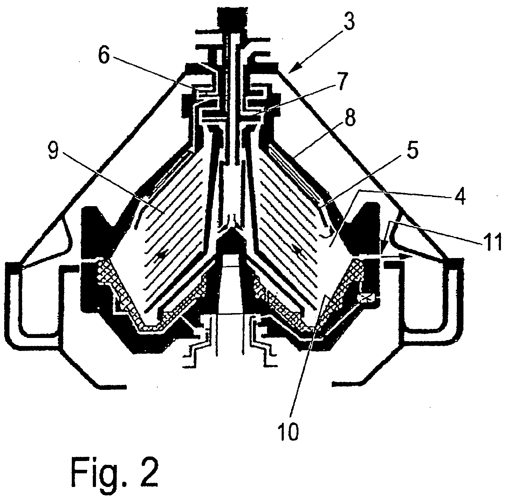

Die Pülpephase sammelt sich dabei (siehe Fig. 2) in einem Feststoffsammekaum 4 des Separators an und wird im Betrieb als viskose, einen hohen Feststoffanteil enthaltene, aber dennoch noch fließfähige Phase über einen Scheideteller 5 und eine Schälscheibe 6 als erste Austragseinrichtung - also eine an sich zum Flüssigkeitsaustrag bestimmte Austragseinrichtung - ausgetragen und der geklärte Zitrussaft als fließfähige leichtere Phase über eine weitere Schälscheibe 7 als die weitere Austragseinrichtung.

In der Trommel 8 des Separators, der für einen kontinuierlichen Betrieb ausgelegt ist, ist vorzugsweise ein Trenntellerpaket 9 angeordnet. Die Trommel 8 weist ferner ein weiteres, diskontinuierlich arbeitendes Entleerungssystem für Feststoffe auf, welches hier einen fluidgesteuerten Kolbenschieber 10 und Feststoffaustragsöffnungen 11 umfasst.

Der Schälscheibe 7 ist eine Klarsaftablaufleitung 12 nachgeschaltet, durch welche der geklärte Zitrussaft der weiteren Verarbeitung oder einem Zwischentank zugeführt wird. Das Feststoff-Entleerungssystem dient dazu, ergänzend durch eine Entleerung Feststoffe zu entleeren, wenn der Trubstoffanteil im geklärten Zitrussaft zu hoch wird, um das Tellerpaket in der Trommel 8 durchzuspülen.

Der Schälscheibe 6 - sie Fig. 1 - ist ferner eine Pülpeablaufleitung 13 nachgeschaltet, durch welche die Pülpephase abgeleitet wird.

In die Pülpeablaufleitung 13 ist eine Dichte-Durchlussmesseinrichtung 14 geschaltet bzw. eingebaut, mit welcher vorzugsweise kontinuierlich - die Dichte der durch die Messeinrichtung fließenden Pülpephase gemessen und ermittelt wird. In Abhängigkeit von der Dichtemessung steuert die Dichtedurchflussmesseinrichtung bzw. ein dieser zugeordnetes Steuergerät ein der Dichtedurchflußmesseinrichtung nachgeschaltetes Regelventil 15 an, mit dem die Schälscheibe 6 angedrosselt werden kann.

Um Verluste zu vermeiden, wird in dem Fall, dass der Feststoffanteil in der Pülpephase zu gering ist - also insbesondere beim Anfahren bzw. nach einer Feststoffentleerung mit dem Feststoffentleerungssystem mit dem Kolbenschieber - ein Teil der Pülpephase oder die gesamte Pülpephase durch Umschalten auf eine von der Pülpeableitung abzweigende Rückführleitung 16 zwischen dem Ausgang des Regelventils 9 und der Zulaufleitung 1 in die Trommel zurückgeleitet, bis sich nach einer gewissen Zeit genügend Pülpe im Feststoffsammelraum 4 gesammelt hat, so dass sie beginnt, über den Scheideteller 5 zu strömen. Die Dichtemessung kann in Intervallen wiederholt werden. Ist die Dichte genügend groß, zeigt dies an, dass ein Umschalten erfolgen kann.

In die Rückführleitung 16 sind hierzu ein Ventil - vorzugsweise ein 2/2-Wegeventil-17 und ein optionales Rückschlagventil 18 geschaltet, um mit dem letzteren die Rücklaufleitung verschließen zu können und um ein Einströmen bzw. Rückströmen im Bereich des Rückschlagventils 18 zu verhindern.

Wenn die Rückführleitung 16 verschlossen ist, wird die Pülpephase hier über ein weiteres 2/2Wegeventil 19 in einen Pülpetank 20 geleitet.

Es ist optional denkbar, von der Pülpeableitung 7, hier vor der Messeinrichtung - eine weitere Zweigleitung 21 abzuzweigen, in die ein weiteres Ventil 22 geschaltet sein kann. Diese Zweigleitung 21 kann für eine Probenentnahme genutzt werden.

### Bezugszeichen

- Zuleitung: 1
- Pumpe: 2
- Separator: 3
- Feststoffsammelraum: 4
- Scheideteller: 5
- Schälscheibe: 6
- Schälscheibe: 7
- Trommel: 8
- Trenntellerpaket: 9
- Kolbenschieber: 10
- Feststoffaustragsöffnungen: 11
- Klarsaftablaufleitung: 12
- Pülpeablaufleitung: 13
- Dichte-Durchlussmesseinrichtung: 14
- Regelventil: 15
- Rückführleitung: 16
- Ventil: 17
- Rückschlagventil: 18
- Ventil: 19
- Pülpetank: 20
- Zweigleitung: 21
- Ventil: 22

## Patentansprüche

1. Verfahren zur Reduzierung des Pülpegehaltes von pülpehaltigen Fruchtsäften, insbesondere Zitrussäften, bei dem der Fruchtsaft im Zentrifugalfeld eines Separator (3) kontinuierlich von einer Pülpephase geklärt wird, welche durch einen Flüssigkeitsaustrag aus der Separatortrommel abgeleitet wird, wobei die Pülpe als fließfähige schwerere Phase über einen Scheideteller (5) und eine erste Schälscheibe (6) als Flüssigkeitsaustrag und eine der ersten Schälscheibe (6) nachgeschaltete Pülpeablaufleitung (13) aus der Trommel des Separators ausgetragen wird und dass der geklärte Fruchtsaft, insbesondere der geklärte Zitrussaft, als fließfähige leichtere Phase über eine weitere Schälscheibe (7) ausgetragen wird, **dadurch gekennzeichnet, dass** die Dichte der aus dem Separator abgeleiteten Pülpephase mit einem Dichtedurchflussmessgerät (14) gemessen wird und dass in Abhängigkeit von dieser Dichtemessung eine Ansteuerung zumindest einer ansteuerbaren Einrichtung (15, 17) vorgenommen wird, durch deren Ansteuerung die Dichte der Pülpephase beeinflussbar ist und dass in dem Fall, dass die Dichte und damit der Feststoffanteil in der Pülpephase einen vorgegebenen unteren Grenzwert unterschreitet, zumindest ein Teil der durch die Pülpeablaufleitung (13) fließenden Phase durch eine von der Pülpeablaufleitung (13) abzweigende Rückführleitung (16) zur Zulaufleitung (1) in die Trommel (8) zurückgeleitet wird, wobei das Zurückleiten der Pülpephase in die Zulaufleitung (1) beim Anfahren des Separators oder nach Feststoffentleerungen mit einem weiteren, diskontinuierlich arbeitenden Feststoffentleerungssystem erfolgt.

2. Verfahren nach Anspruch 1, **dadurch gekennzeichnet, dass** in Abhängigkeit von der Messung ein in die Pülpeablaufleitung (13) geschaltetes Regelventil (15) angesteuert wird.

3. Verfahren nach Anspruch 2, **dadurch gekennzeichnet, dass** mit dem Regelventil (15) die Schälscheibe (5) angedrosselt wird.

4. Verfahren nach einem der vorstehenden Ansprüche, **dadurch gekennzeichnet, dass** der nicht durch die Rückführleitung (9) geleitete Anteil der Pülpephase in einen Pülpetank (13) geleitet wird.

## Claims

1. A method for reducing the pulp content of pulp-containing fruit juices, especially citrus juices, in which the fruit juice is continually clarified from a pulp phase in the centrifugal field of a separator (3), the pulp phase being discharged from the drum of the separator through liquid discharge, wherein the pulp is discharged as a flowable heavier phase via a separator plate (5) and a first peeling disc (6) as a liquid discharge and via a pulp discharge line (13), which is downstream of the peeling disc (6), from the drum of the separator, and the clarified fruit juice, especially the clarified citrus juice, is discharged as a flowable lighter phase via a further peeling disc (7), **characterized in that** the density of the pulp phase discharged from the separator is measured by a density flow-through measuring device (14), and the control of at least one controllable device (15, 17) is carried out depending on said density measurement, by the control of which the density of the pulp phase can be influenced, and in the case that the density and thus the solids content in the pulp phase drops beneath a predetermined lower threshold value at least a portion of the phase flowing through the pulp discharge line (13) is recirculated via a recirculation line (16), which branches off from the pulp discharge line (13), to the feed line (1) into the drum (8), wherein the recirculation of the pulp phase to the feed line (1) occurs during a start-up of the separator or after solids discharges with a further, discontinuously operating solids discharging system.

2. A method according to claim 1, **characterized in that** a control valve (15) which is switched into the pulp discharge line (13) is triggered depending on the measurement.

3. A method according to claim 2, **characterized in that** the peeling disc (5) is slightly throttled by the control valve (15).

4. A method according to one of the preceding claims, **characterized in that** the fraction of the pulp phase that is not guided through the recirculation line (9) is conducted to a pulp tank (13).

## Revendications

1. Procédé servant à réduire la teneur en pulpe de jus de fruits pulpeux, en particulier de jus d'agrumes, dans lequel le jus de fruit est clarifié en continu dans une centrifugeuse d'un séparateur (3) en éliminant une phase pulpeuse qui est dérivée hors du tambour de séparateur à travers une décharge de liquide, la pulpe qui une phase à écoulement libre plus lourde étant extraite du tambour du séparateur en passant par un disque de séparation (5) et un premier disque d'écorçage (6) formant une évacuation de liquide et par une conduite d'évacuation de la pulpe (13) montée en aval du premier disque d'écorçage (6), et lequel le jus de fruit clarifié, en particulier le jus d'agrumes clarifié, étant déchargé en tant que phase à écoulement libre plus légère par l'intermédiaire d'un autre disque d'écorçage (7), **caractérisé en ce que** la densité de la phase pulpeuse dérivée hors du séparateur est mesurée avec un densimètre-débitmètre (14) et **en ce qu'**un dispositif (15, 17) dont la commande permet d'influer sur la densité de la phase pulpeuse peut être commandé est commandé en fonction de cette mesure de densité, et **en ce que** dans le cas où la densité donc la proportion de matières solides dans la phase pulpeuse est inférieure à une valeur limite inférieure prédéfinie, au moins une partie de la phase s'écoulant à travers la conduite d'évacuation de la pulpe (13) est reconduite par une conduite de retour (16) bifurquant de la conduite d'évacuation de pulpe (13) en direction de la conduite d'arrivée (1) dans le tambour (8), le renvoi de la phase pulpeuse dans la conduite d'arrivée (1) ayant lieu lors du démarrage du séparateur ou après des vidanges de matières solides avec un autre système de vidange de matières solides fonctionnant de manière discontinue.

2. Procédé selon la revendication 1, **caractérisé en ce qu'**une vanne de régulation (15) montée dans la conduite d'évacuation de la pulpe (13) est commandée en fonction de la mesure.

3. Procédé selon la revendication 2, **caractérisé en ce que** le disque d'écorçage (5) est étranglé par la vanne de régulation (15).

4. Procédé selon l'une quelconque des revendications précédentes, **caractérisé en ce que** la proportion de la phase pulpeuse qui n'est pas acheminée par la conduite de retour (9) est amenée dans un réservoir de pulpe (13).
